# DEMANDE DE BREVET EUROPEEN

(11) **EP 2 031 283 A1**
(43) Date de publication de la demande: **04.03.2009**
(21) Numéro de dépôt: 08162950.3
(22) Date de dépôt: 26.08.2008
(51) Int. Cl.: F16H 63/38

(54) **Dispositif de commande de boîte de vitesses pour véhicule automobile**

(30) Priorité: 28.08.2007 FR 0757216
(71) Demandeur: PEUGEOT CITROËN AUTOMOBILES S.A., 78140 Velizy Villacoublay (FR)
(72) Inventeur: Aleksander, Boris, 91400 Orsay (FR)

(57) **Abrégé**

L'invention concerne un dispositif de commande de boîte de vitesses pour véhicule automobile comprenant un arbre de commutation (3) en liaison pivot glissant selon un premier axe (X) par rapport à un carter (2) et des moyens pour maintenir l'arbre de commutation (3) dans au moins une position stable par rapport au carter (2). Ces moyens comportent deux poussoirs (16a, 16b) en opposition l'un de l'autre selon un second axe (Y) perpendiculaire au premier axe (X), des moyens (17) pour transmettre aux poussoirs (16a, 16b) un effort tendant à les écarter l'un de l'autre et des chemins de guidage (9a, 9b, 10a, 10b, 11a, 11b) aptes à recevoir chacun un poussoir (16a, 16b). Les chemins de guidage (9a, 9b, 10a, 10b, 11a, 11b) sont solidaires du carter (2). Selon l'invention, les chemins de guidage (9a, 9b, 10a, 10b, 11a, 11b) définissent plusieurs positions stables de l'arbre de commutation (3) par rapport au carter (2).

## Description

La présente invention concerne un dispositif de commande de boîte de vitesses pour véhicule, notamment pour véhicule automobile.
Un dispositif de commande de boîte de vitesses pour véhicule automobile transmet par un arbre de commutation les mouvements de sélection de vitesse, par exemple à partir d'un levier de commande manuelle. L'arbre de commutation est monté en liaison pivot glissant par rapport à un carter. Les mouvements du levier de sélection sont transformés au niveau d'un levier de commutation en mouvement de rotation et de translation suivant l'axe principal de l'arbre de commutation. Pour améliorer l'agrément de la manipulation de la boîte de vitesses, on cherche à diminuer les jeux dans la commande de la boîte pour augmenter la sensation de précision. A cet effet, les mouvements de l'arbre peuvent être guidés dans des directions prédéterminées par une coulisse comportant des chemins de guidage, par exemple usinés dans une tôle. Le tracé des chemins de guidage forme les déplacements possibles de l'arbre de commutation.

La demande de brevet FR 2 818 726 décrit un dispositif de commande de boîte de vitesses du type défini ci-dessus. Un ressort, logé dans un perçage borgne de l'arbre de commutation, suivant un axe perpendiculaire à l'axe principal de l'arbre de commutation, pousse une bille contre les chemins de guidage formant la coulisse. Les chemins de guidage sont en forme de cuvette et sont séparés les uns des autres par des rampes s'opposant au mouvement de l'arbre de commutation suivant son axe principal. Ainsi, la bille doit remonter une rampe en s'opposant à la force développée par le ressort pour changer de chemin de guidage. Cette augmentation de la force indique à l'utilisateur un changement de chemin de guidage et améliore l'ergonomie dans la commande de la boîte de vitesses.
Ce dispositif crée un effort radial sur l'arbre de commutation entraînant un couple suivant un axe orthogonal à l'axe principal de l'arbre de commutation et à l'axe du perçage. Il en résulte des contraintes dans la liaison pivot glissant entre l'arbre de commutation et le carter. Ces contraintes ont pour principal inconvénient de réduire la durée de vie de la liaison pivot glissant, et par suite du dispositif de commande de boîte de vitesses.
Du fait du faible espace disponible pour l'implantation du ressort dans le perçage de l'arbre de commutation, il est également très difficile d'obtenir à la fois un effort élevé et une course de bille suffisante. La préférence d'un effort élevé se fait donc au détriment d'une longue course de bille, et nécessite par conséquent des tolérances plus faibles. Inversement, une longue course de bille diminue les possibilités d'effort élevé.

La demande de brevet FR 2 884 888 décrit un dispositif de commande de boîte de vitesses utilisant un mécanisme de rappel associé à un mécanisme de limitation des mouvements de l'arbre de commutation. Le mécanisme de rappel comprend essentiellement deux cames fixées au support du dispositif de commande de boîte de vitesses et deux billes logées dans une cartouche cylindrique solidaire d'un arbre de commutation, les deux billes étant maintenues en appui élastique, par un ressort hélicoïdal de compression, contre les cames. Les cames comportent chacune une cuvette correspondant à la position neutre de l'arbre de commutation et des rampes latérales exerçant sur l'arbre de commutation un couple tendant à éloigner l'arbre de commutation de sa position neutre lorsque l'arbre de commutation est entraîné en rotation au-delà d'un angle limite. Le mécanisme de limitation des mouvements de l'arbre de commutation consiste en une coulisse solidaire du support et en un coulisseau fixé à l'arbre de commutation. La coulisse et le coulisseau coopèrent avec le mécanisme de rappel de manière à définir plusieurs positions stables de l'arbre de commutation.
Un tel dispositif présente l'inconvénient de nécessiter deux mécanismes distincts pour, d'une part, l'engagement des mouvements de l'arbre de commutation, et, d'autre part, le maintien de l'arbre de commutation dans ses différentes positions stables correspondant aux vitesses de la boîte de vitesses.

L'invention vise à pallier les inconvénients cités plus haut en proposant un dispositif de commande de boîte de vitesses permettant à la fois l'engagement des mouvements de l'arbre de commutation et son maintien dans ses différentes positions stables. Le dispositif est ainsi de conception économique, peu encombrante, et facile à monter. Le dispositif selon l'invention comporte des moyens d'auto-compensation de l'effort radial permettant une suppression de tout couple résultant sur l'arbre de commutation, et une plus grande course de bille en même temps qu'un effort élevé de la bille sur les chemins de guidage.

A cet effet, l'invention a pour objet un dispositif de commande de boîte de vitesses pour véhicule, notamment pour véhicule automobile, comprenant un arbre de commutation en liaison pivot glissant selon un premier axe par rapport à un carter et des moyens pour maintenir l'arbre de commutation dans au moins une position stable par rapport au carter. Ces moyens comportent deux poussoirs en opposition l'un de l'autre selon un second axe perpendiculaire au premier axe, des moyens pour transmettre aux poussoirs un effort tendant à les écarter l'un de l'autre et des chemins de guidage aptes à recevoir chacun un poussoir. Les chemins de guidage sont solidaires du carter et définissent plusieurs positions stables de l'arbre de commutation par rapport au carter.

De façon simple, les poussoirs comportent des billes.

Les poussoirs peuvent notamment être écartés l'un de l'autre par un ressort logé dans un alésage de l'arbre de commutation, l'alésage s'étendant selon le second axe.

Dans une forme particulière de réalisation, les chemins de guidage ont une forme annulaire autour du premier axe. La forme annulaire permet de conserver une rotation possible de l'arbre de commutation autour du premier axe sans variation d'effort sur les poussoirs. Cependant, ils peuvent également prendre une forme circulaire de manière à définir des positions stables en translation et en rotation de l'arbre de commutation. Tout déplacement de l'arbre de commutation, rotation ou translation, entraîne dans cette variante une variation d'effort sur les poussoirs.

Les chemins de guidage peuvent être distincts l'un de l'autre, ou bien former un chemin de guidage continu.

La liaison pivot glissant peut comporter un palier dont une bague extérieure est en tôle. Dans cette forme particulière de réalisation, les chemins de guidage peuvent être directement formés dans la tôle de la bague extérieure du palier.

Le dispositif de commande de boîte de vitesses selon l'invention peut également comporter des moyens de limitation du déplacement de l'arbre de commutation selon le premier axe.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un dispositif de commande selon l'invention en vue de dessus ;
- la figure 2 est une vue en coupe suivant la ligne A-A de la figure 1.

Par souci de clarté, les mêmes éléments porteront les mêmes repères dans les différentes figures.

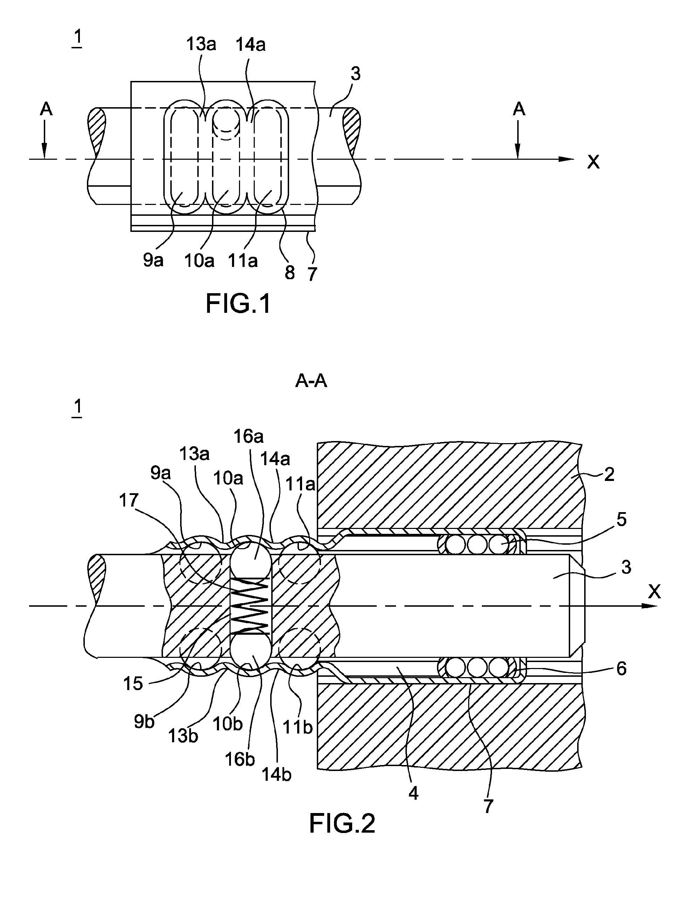

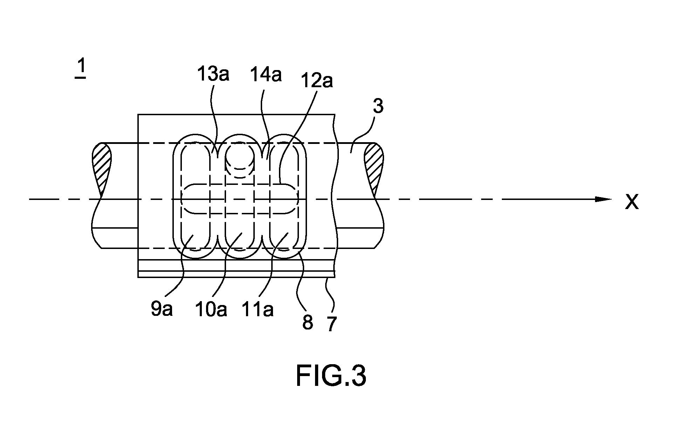

Le dispositif de commande de boîte de vitesses 1 représenté sur les figures 1 et 2 comprend un support 2 fixé à un carter d'une boîte de vitesses, et un arbre de commutation 3 en liaison pivot glissant par rapport au support 2 suivant un axe longitudinal X, au moyen d'un palier 4, par exemple à roulements. Des billes 5 du palier 4 sont guidées dans une cage 6 et roulent entre l'arbre de commutation 3 et une bague extérieure 7. Une coulisse 8 solidaire du support 2 comprend des chemins de guidage 9a, 10a et 11 a et leurs symétriques 9b, 10b et 11 b selon l'axe X. Les chemins de guidage 9a, 9b, 10a, 10b, 11 a et 11 b ont par exemple une forme annulaire autour de l'axe longitudinal X, mais ils peuvent également prendre une forme circulaire. La coulisse peut comprendre également deux chemins de guidage 12a et 12b symétriques selon l'axe X reliant respectivement les chemins de guidages 9a, 10a et 11 a, d'une part, et 9b, 10b et 11 b, d'autre part, les chemins de guidage 12a et 12b s'étendant tous deux, par exemple, selon des directions parallèles à l'axe X. Les chemins de guidage 9a, 9b, 10a, 10b, 11a et 11b, plutôt que de former des chemins de guidage 9a, 9b, 10a, 10b, 11a et 11b distincts, forment alors un chemin de guidage continu. Les chemins de guidage 9a, 9b, 10a, 10b, 11a, 11b, 12a et 12b sont réalisés dans la coulisse par exemple par extrusion, matriçage ou emboutissage. Les chemins de guidage 9a, 9b, 10a, 10b, 11a, 11b, 12a et 12b forment des cuvettes s'ouvrant en direction de l'axe X. Pour la suite de la description, les cuvettes formées par les chemins de guidages 9a, 9b, 10a, 10b, 11a, 11b, 12a et 12b seront référencées par les mêmes repères que les chemins de guidage eux-mêmes. Les cuvettes 9a et 10a, 10a et 11a, 9b et 10b, et 10b et 11b sont respectivement séparées par des bossages 13a, 14a, 13b et 14b.
Dans une forme particulière de réalisation, la bague extérieure 7 du palier 4 peut être en tôle, prolongée suivant l'axe X et mise en forme de manière à constituer en elle-même la coulisse 8.
Un alésage 15 est pratiqué dans l'arbre de commutation 3 selon un axe Y perpendiculaire à l'axe X. Deux billes 16a et 16b sont précontraintes par un ressort hélicoïdal de compression 17, logé dans l'alésage 15, contre la surface intérieure de la coulisse 8, et en particulier contre le fond de deux cuvettes 9a et 9b, 10a et 10b, ou 11 a et 11 b. Les billes ont, par exemple, le même diamètre nominal que l'alésage, tout en conservant un jeu suffisant pour permettre le déplacement des billes 16a et 16b dans l'alésage 15.
Lors du coulissement longitudinal de l'arbre de commutation 3 selon l'axe X, les billes 16a et 16b doivent remonter le long des bossages 13a et 13b, ou 14a et 14b, comprimant ainsi le ressort hélicoïdal de compression 17. La compression du ressort hélicoïdal de compression 17 entraîne deux forces, chaque force ayant une composante longitudinale suivant l'axe X, et une composante transversale perpendiculaire à l'axe X. L'addition des composantes longitudinales de ces forces s'oppose à la translation de l'arbre de commutation 3 selon l'axe X, et indique ainsi à l'utilisateur le changement de chemin de guidage. L'addition des composantes transversales des deux forces est nulle du fait de la symétrie des chemins de guidage 9a, 9b, 10a, 10b, 11a et 11b. Au-delà d'un déplacement transversal prédéterminé, correspondant à la moitié de la distance entre deux cuvettes successives, les billes 16a et 16b se trouvent chacune dans un chemin de guidage différent du précédent, et entraînent l'arbre de commutation 3 dans une autre position stable sans nécessiter l'intervention de l'utilisateur.
Le déplacement des billes 16a et 16b peut être limité par tout moyen. En particulier, la bague extérieure 7 peut comporter, par exemple, des bossages 18 et 19 plus protubérants que les bossages 13a, 14a, 13b et 14b. Une butée 20 peut être logée à l'intérieur des spires du ressort hélicoïdal de compression 17, la butée 20 étant d'une longueur appropriée pour limiter la compression du ressort hélicoïdal de compression 17 de manière à empêcher le passage des billes 16a et 16b au-delà des bossages 18 et 19, tout en permettant le passage des billes 16a et 16b par les bossages 13a, 14a, 13b et 14b. Le déplacement transversal suivant l'axe X de l'arbre de commutation 3 se trouve ainsi délimité par les chemins de guidages 9a-9b et 11a-11b extrêmes de la bague extérieure 7.

## Revendications

1. Dispositif de commande de boîte de vitesses pour véhicule, notamment pour véhicule automobile, comprenant un arbre de commutation (3) en liaison pivot glissant selon un premier axe (X) par rapport à un carter (2) et des moyens pour maintenir l'arbre de commutation (3) dans au moins une position stable par rapport au carter (2), ces moyens comportant deux poussoirs (16a, 16b) en opposition l'un de l'autre selon un second axe (Y) perpendiculaire au premier axe (X), des moyens (17) pour transmettre aux poussoirs (16a, 16b) un effort tendant à les écarter l'un de l'autre et des chemins de guidage (9a, 9b, 10a, 10b, 11a, 11b) aptes à recevoir chacun un poussoir (16a, 16b), les chemins de guidage (9a, 9b, 10a, 10b, 11a, 11b) étant solidaires du carter (2), **caractérisé en ce que** les chemins de guidage (9a, 9b, 10a, 10b, 11a, 11b) définissent plusieurs positions stables de l'arbre de commutation (3) par rapport au carter (2).

2. Dispositif selon la revendication 1, **caractérisé en ce que** les poussoirs (16a, 16b) comportent des billes.

3. Dispositif selon l'une des revendications précédentes, **caractérisé en ce que** les moyens (17) pour transmettre aux poussoirs (16a, 16b) un effort tendant à les écarter l'un de l'autre comportent un ressort (17) logé dans un alésage (15) de l'arbre de commutation (3), l'alésage (15) s'étendant selon le second axe (Y).

4. Dispositif selon l'une des revendications précédentes, **caractérisé en ce que** les chemins de guidage (9a, 9b, 10a, 10b, 11a, 11b) ont une forme annulaire autour du premier axe (X).

5. Dispositif selon l'une des revendications 1 à 3, **caractérisé en ce que** les chemins de guidage (9a, 9b, 10a, 10b, 11a, 11b) ont une forme circulaire.

6. Dispositif selon l'une des revendications précédentes, **caractérisé en ce que** les chemins de guidage (9a, 9b, 10a, 10b, 11a, 11b) sont distincts.

7. Dispositif selon l'une des revendications 1 à 5, **caractérisé en ce que** les chemins de guidage (9a, 9b, 10a, 10b, 11a, 11b) forment un chemin de guidage continu.

8. Dispositif selon l'une des revendications précédentes, **caractérisé en ce que** la liaison pivot glissant comporte un palier (4) dont une bague extérieure (7) est en tôle.

9. Dispositif selon la revendication 8, **caractérisé en ce que** les chemins de guidage (9a, 9b, 10a, 10b, 11a, 11b) sont formés dans la tôle de la bague extérieure (7) du palier (4).

10. Dispositif selon l'une des revendications précédentes, **caractérisé en ce qu'**il comprend, en outre, des moyens (18, 19, 20) de limitation du déplacement de l'arbre de commutation (3) selon le premier axe (X).
